# EUROPÄISCHE PATENTANMELDUNG

(11) **EP 0 575 664 A1**
(43) Veröffentlichungstag der Anmeldung: **29.12.1993**
(21) Anmeldenummer: 92121671.9
(22) Anmeldetag: 19.12.1992
(51) Int. Cl.: C09K 5/04

(54) **Verfahren zur Anwendung eines Kältemittelgemisches**

(30) Priorität: 19.06.1992 DE 4220162
(71) Anmelder: Privates Institut für Luft- und Kältetechnik Gmbh, D-01309 Dresden (DE)
(72) Erfinder: Heinrich, Günter, Prof. Dr.-Ing., O-8010 Dresden (DE); Lippold, Hans, Dr. rer. nat., O-8045 Dresden (DE); Schenk, Jürgen, Dr. rer. nat., O-8021 Dresden (DE)
(74) Vertreter: Seefeld, Gerd

(57) **Zusammenfassung**

Die Erfindung betrifft ein Verfahren zur Anwendung eines Kältemittelgemisches zur FCKW-Substitution bei vorhandenen Kälteanlagen.

Aufgabe der Erfindung ist es, die bekannten Nachteile bei der Substitution von FCKW zu vermeiden. Erfindungsgemäß wird die Aufgabe dadurch gelöst, daß die Leckverluste durch FKW, insbesondere R134a, schrittweise ersetzt werden. Dabei wird das dem FCKW zugeordnete Kältemaschinenöl beibehalten.

## Beschreibung

Die Erfindung betrifft bestehende Kälteanlagen, vorzugsweise großer Kälteleistung, die mit FCKW gefüllt sind, für die in den nächsten Jahren nicht mehr genügend R12 zur Verfügung steht. Nach nationalen und internationalen Restriktionen können diese zwar noch betrieben werden, aber zum Ersatz von Leckverlustmengen besteht in wenigen Jahre keine Versorgungssicherheit für R12, das bekannterweise für Neuanlagen bereits ab 1993 verboten ist.
Bei Kälteanlagen kleiner Leistung, vorzugsweise mit Hermetikverdichtern, die nur geringe Leckverluste haben, ist ein Ersatz durch eine neue Kältemaschine mit FKW, vorzugsweise mit R134a, vorgesehen. Das ist um so aufwendiger, je größer die Leckverluste und wertintensiver die Kälteanlagen sind. Eine andere Lösung besteht darin, im Sinne eines "drop in" das Kältemittel FCKW durch FKW zu ersetzen und dabei gleichzeitig ein dem FKW angepaßtes Kälteöl mit einzusetzen, z. B. Polyol-Ester oder Polyalkylen-Glycole. Das setzt jedoch voraus, daß der innere Kreislauf (Kreislaufteile) vollständig von R12 und dem zugeordneten Mineralöl gereinigt werden. Hinzu kommt, daß auch noch andere Veränderungen an der Anlage vorgenommen werden müssen, so daß nur in wenigen Fallen "drop in" möglich ist. Das Reinigen der Kreislaufteile wird um so schwieriger und aufwendiger, je größer die Leistungseinheiten der Kälteanlagen sind. Besonders problematisch ist es, das Mineralöl vollständig zu entfernen. Auch geringe Reste von R12 sind schädlich (z. B. in Öl gelöstes R12), da diese mit den dem FKW zugeordneten Polyolesterölen nicht verträglich sind. Der Kältekreislauf kann mit Polyolesterölen nicht so trocken gefahren werden wie bei klassischen Kälteölen, so daß Hydrolyse-Reaktionen an R12 unter Bildung von HCI die Folge sein können. Der Einsatz der Polyesteröle ist jedoch erforderlich, da die FKW, vorzugsweise das R134a, nicht öllöslich mit Mineralölen sind. Damit wird die Substitution der FCKW durch FKW zu einem aufwendigen technischen und wirtschaftlichen Problem. Diese belasten zugleich die Umwelt. Nachteilig ist weiterhin, daß die aufwendige Umstellung in kürzester Frist erfolgen muß, da bei Unterschreiten der Mindestkältemittelmenge die vollständige Substitution erforderlich ist.

Aufgabe der Erfindung ist es, die beschriebenen Nachteile bekannter Lösungen zu vermeiden und eine Löung zu finden, die für viele Jahre, in vielen Fallen mehr als ein Jahrzehnt anwendet werden kann.

Die Aufgabe der Erfindung wird durch die Merkmale der Patentansprüche gelöst, indem die Leckageverluste durch FKW solange ersetzt werden, bis eine Restmenge an FCKW von 20-30 Masse % erreicht wird. Vorzugsweise wird als FKW das Kältemittel R134a eingesetzt.
Überraschend wurde gefunden, daß der Ölhaushalt des Kältemittelverdichters und der Öltransport in den Kreislaufteilen der Anlage gewährleistet ist, wenn ein Mindestanteil von FCKW von 20-30 % vorhanden ist. Auf eine Beteiligung von FKW an der funktionellen Regulierung des Ölhaushalts im Kältekreislauf wird verzichtet. Damit muß kein den FKW zugeordnetes Öl anstelle des dem FCKW zugeordneten Öls eingesetzt werden.
Die Öllöslichkeit des im Laufe der Metamorphose des Kältemittels immer mehr abnehmenden FCKW-Anteils ist natürlich nur bis zu einem Mindestanteil an FCKW gewährleistet. Je nach Art des Mineralöls ergibt sich ein anderer Mindestanteil des FCKW am FCKW/FKW-Gemisch. Bei R12/R134a liegt der Mindestanteil im Bereich von weniger als 20 bis 30 Masseprozent. Da durch das naheazeotrope Verhalten einiger FCKW/FKW-Gemische die Normalsiedepunkte nicht weit voneinander entfernt liegen, treten die Kältemittelverluste durch Leckage zunehmend mit einem höheren FKW-Anteil auf. Somit erstreckt sich die Metamorphose des Kältemittels bis zur Mindestgrenze, je nach jährlicher Leckagemenge über 7 bis 15 Jahre, so daß bei der vollständigen Substitution dann langzeiterprobte Öl-FKW-Systeme zur Verfügung stehen sollten.

Die Erfindung soll an nachfolgendem Ausfürungsbeispiel näher erläutert werden.
Eine Kälteanlage hat bei einer Nennkälteleistung von 1,1 MW eine Kältemittelfüllmenge von etwa 750 kg. Die Verdampfungstemperatur soll bei etwa 0 °C, die Kondensationstemperatur bei 40 °C liegen. Leckagen und Wartungsarbeiten sind mit einem jährlichen Verlust von etwa 70 kg Kältemittel R12 zu rechnen. Diese Menge ist durch das Kältemittel R134a zu ersetzen. Aus dem Dampf-Flüssigkeits-Gleichgewicht des Systems folgt, daß die Zusammensetzung der Flüssigkeit und des Dampfes sich so wenig unterscheidet, daß man von einer einheitlichen Zusammensetzung beider Phasen ausgehen kann, sich also die Anteile der Komponenten bei Leckagen nicht verändern Bleibt die jährliche Leckmenge konstant, so wird erst nach etwa 12 Jahren der R12-Anteil unter 30 % absinken. Erst dann muß darüber befunden werden, ob eine komplette Reinigung und Neubetüllung mit einem R134a-Kälteöl erfolgen soll oder eine Verschrottung der Anlage sinnvoll ist.

## Patentansprüche

1. Verfahren zur Anwendung eines Kältemittelgemisches zur FCKW-Substitution bei vorhandenen Kälteanlagen, dadurch gekennzeichnet, daß schrittweise entsprechend der Arbeitsstoffverluste in Folge von Leckagen, wobei vorzugsweise R12 als Arbeitsstoff vorhanden ist, ein Ausgleich der Verluste durch Zusatz von FKW, vorzugsweise R134a, vorgenommen wird, daß dabei unverändert als Schmierstoffe FCKW-Kältemaschinenöle, vorzugsweise R12-Kältemaschinenöle, eingesetzt werden und daß dieser Ausgleich der Arbeitsstoffverluste in der genannten Verfahrensweise solange wiederholt wird, wie ein Mindestgehalt von 20 - 30 Masse % FCKW in der Arbeitsstoffmischung gewährleistet ist.

2. Verfahren nach Anspruch 1, dadurch gekennzeichnet, daß zur Kontrolle des FCKW-Anteiles im Arbeitsstoff der Kälteanlage die Konzentrationen von FKW und FCKW kontinuierlich bestimmt werden.
